# EUROPEAN PATENT APPLICATION

(11) **EP 4 122 601 A1**
(43) Date of publication of application: **25.01.2023**
(21) Application number: 21772405.3
(22) Date of filing: 10.03.2021
(51) Int. Cl.: B01L 3/00

(54) **FLUID ANALYSIS CHIP**

(30) Priority: 17.03.2020 KR 20200032732
(71) Applicant: Nanoentek, Inc., Seoul 08389 (KR)
(72) Inventor: KAN, Seok Joo, Suwon-si Gyeonggi-do 16363 (KR); KIM, Yu Rae, Hwaseong-si Gyeonggi-do 18484 (KR); CHUNG, Chan Il, Seoul 06091 (KR); YUN, Seok Ki, Hwaseong-si Gyeonggi-do 18415 (KR)
(74) Representative: advotec.
(86) International application number: PCT/KR2021/002976
(87) International publication number: WO 2021/187800

(57) **Abstract**

Disclosed is a fluid analysis chip. The fluid analysis chip according to the present invention can be produced my means of a simple process of adhering upper and lower plates using OCA film, can be used with the inner height and shape precisely controlled to conform to a variety of requirements, and can enhance reliability due to greater adhesiveness than in the conventional chip.

## Description

### Technical Field

The present disclosure relates to a fluid analysis chip and, more particularly, to a fluid analysis chip that can be produced in a simple structure by bonding upper and lower plates using an optically clear adhesive (OCA) film, can be used with the inner height and shape precisely controlled to conform to a variety of requirements, and can enhance reliability due to greater adhesiveness than in the conventional chip.

### Background Art

Generally, the analysis of fluid samples is widely used in the fields of chemistry and biotechnology, as well as in the field of diagnostics through analyses of blood and body fluids collected from patients. In recent years, various types of miniaturized analysis and diagnostic equipment and technologies have been developed in order to perform the analysis of such fluid samples more simply and efficiently.

In particular, lab-on-a-chip technology refers to a technology that implements various experimental processes performed in a laboratory, such as sample separation, purification, mixing, labeling, analysis, and cleaning, on a small-sized chip by adopting microfluidics technology, etc. In the design of a lab-on-a-chip, microfluidics and micro-liquid handling system (LHS) related technologies are mainly used. Additionally, regarding the fabrication of a chip structure that implements microfluidics and micro-LHS, a chip with a microchannel formed inside by using a semiconductor circuit design technology is commercially available.

The lab-on-a-chip technology is being actively used in various industries. For example, a portable DNA analysis device for personal identification capable of performing the processes from DNA extraction to analysis simultanously on a chip is being developed.

In the case of in vitro diagnostics, research into the field of point-of-care testing (POCT) is also being actively conducted. POCT devices, that is, portable diagnostic tools allow individuals to easily perform complex and detailed examinations of blood and body fluids usually performed in hospitals and laboratories on the spot.

POCT is a point-of-care diagnostic technology that can easily diagnose diseases in medical treatment sites such as emergency rooms, operating rooms, or homes, and is a field whose need and demand are continuously increasing in preparation for an aging and welfare society. Currently, diagnostic tools for measuring blood glucose occupy the mainstream of the market. However, as the practical demand for POCT increases, the demand for diagnostic tools for analyzing various biological materials such as lactic acid, cholesterol, urea, and infectious pathogens is also increasing rapidly.

Such analytical or diagnostic techniques are generally performed by detecting and analyzing reactions between the fluid and the antibody protein or other various samples immobilized inside a chip by using a number of detection methods while moving various fluid samples through microchannels formed inside the chip. Accordingly, controlling the movement of fluid moving inside the chip in which the microchannel is formed is the most important technical element in obtaining fast and accurate analysis results using a miniaturized chip.

As a driving force for moving the fluid through the microchannel formed inside the chip, a method using a small motor or a physical phenomenon called capillarity is employed. In the case of a chip using capillary force as the main driving force, the fluid flowing through the channel has an irregular and non-uniform movement pattern. In particular, this pattern is often observed when the channel becomes extremely low or narrow. This phenomenon occurs because the interaction between the upper and lower inner walls of the channel and the fluid and the interaction between the left and right inner walls of the channel and the fluid are different from each other, which is a big obstacle to the detection and analysis of analytes present in a trace amount in the fluid sample.

In addition, in manufacturing a fine closed channel having a size of less than several tens of micrometers, it is not easy to process the edge of the channel uniformly without loss, which may lead to problems in specifications and quality control during mass production. Moreover, minor errors in the channel structure may hinder fluid flow, resulting in inconsistent analysis results.

In order to solve the above-mentioned problems, Korean Patent Application No. 10-2007-0073659 filed on July 23, 2007 discloses a technology in which, by adjoining a pair of inner walls of a channel with an extension recessed deeper than the channel, a fluid passing through the channel interacts only with the other pair of inner walls (refer to Korean Patent No. KR 10-0878229 filed by the same inventor/applicant) .

In the case of a wall-free channel, since the movement pattern of a fluid passing through a channel is uniformly formed, the generation of bubbles is reduced, reproducibility is ensured, and signal detection from an analyte present in the fluid may be easily performed. In addition, since a micro-sized channel may be implemented on a substrate without fear of loss or deformation of each edge of the channel, mass production and quality control of products may be easily accomplished (refer to Korean Patent No. KR 10-0900511 filed by the same inventor/applicant) .

Meanwhile, fluid analysis chips used for the previously described POCT or lab-on-a-chip are made of polyethylene derivatives such as polycarbonate (PC), polystyrene (PS), polypropylene (PP), polyethylene terephthalate (PET), polymethyl methacrylate (PMMA), or acrylic type plastic material, and are for single use.

In general, a fluid analysis chip is fabricated by bonding an upper plate and a lower plate, and a microchannel of a predetermined height and various microstructures are provided between the bonded upper plate and the lower plate, in which a sample flows and reacts.

However, the existing fluid analysis chips have a problem in that the structure is complicated and the assembly completeness is reduced due to tolerances that occur during processing since an injection hole needs to be made to inject an organic solvent, which is a bonding material, into the bonding surface of the upper and lower plates, and an additional channel for diffusion of the organic solvent should be prepared.

In addition, when the diffusion of the organic solvent is non-uniform, it is difficult to implement a precise inner height, and the bonding strength is lowered due to a reduction in the actual bonding surface area, making it difficult to ensure stable product reliability.

Furthermore, when a contact angle with the plate is low due to the compositional characteristics of a sample to be analyzed, leakage may occur in a wall-free channel, and for this reason, it is necessary to produce a fluid analysis chip suitable for the characteristics of each sample by implementing various channel heights. However, in the existing organic solvent bonding chip, it is not easy to apply various design changes as described above.

Therefore, there is an emerging need for a fluid analysis chip that can solve these problems. In other words, a fluid analysis chip that can be produced in a simple structure by bonding upper and lower plates using an optically clear adhesive (OCA) film, can be used with the inner height and shape precisely controlled to conform to a variety of requirements, and can enhance reliability due to greater adhesiveness than in the conventional chip.

### Disclosure

### Technical Problem

The present disclosure has been made keeping in mind the problems occurring in the related art. An objective of the present disclosure is to remove complex structures for organic solvent injection and diffusion, and produce a fluid analysis chip with a simple structure by using an optically clear adhesive (OCA) film.

An objective of the present disclosure is to increase the accuracy of analysis by precisely controlling the height of an internal microchannel of the fluid analysis chip to conform to a variety of requirements.

An objective of the present disclosure is to ensure product reliability by achieving strong adhesion through bonding of the bonding surface area wider than in the case of the conventional chip.

An objective of the present disclosure is to control the flow rate of a fluid and to cause a fluid to react with a sample buffer at a uniform rate by relieving hydrostatic pressure generated during fluid injection by means of a fluid storage part.

An objective of the present disclosure is to prevent a phenomenon that occurs because the ratio of capillary force and resistance on the microchannel is very large at the beginning of fluid injection, that is, starting from a state where the velocity of the fluid is very high and decreases sharply as the length of the microchannel wetted with the fluid increases, thereby realizing stable fluid drive.

An objective of the present disclosure is to prevent leakage that may occur on the wall-free channel side when a contact angle with a plate is low due to the compositional characteristics of a sample.

An objective of the present disclosure is to enable product changes at a low cost and to secure the degree of freedom in design tailored to the application target by making it possible to change the height and shape of a channel only by changing the shape and thickness of the OCA film without changing the structure of upper and lower plates.

### Technical Solution

In order to achieve the above mentioned objective, according to an embodiment of the present disclosure, there is provided a fluid analysis chip, including: a first plate; a second plate configured to be bonded to the first plate; an optically clear adhesive (OCA) film interposed between the first plate and the second plate to bond the first plate and the second plate; and a microchannel part formed to have a predetermined space between the first plate and the second plate, and into which a fluid to be analyzed is introduced and through which the fluid to be analyzed flows, wherein shape and height of at least a portion of the microchannel part may be determined according to shape and thickness of the OCA film.

At least a portion of the microchannel part may have a wall-free structure.

The OCA film may include: a bonding part configured to contact and bond the first plate and the second plate; and a channel forming part configured to be formed through inside of the bonding part and to determine the shape of at least a portion of the microchannel part.

The microchannel part may include: a pre-processing part in which the fluid is injected and temporarily accommodated; a channel part in which the fluid accommodated in the pre-processing part moves and an antigen-antibody reaction occurs; and a washing part in which residual fluid passed through the channel part is accommodated.

The pre-processing part may include: a sample injection part into which the fluid is injected; and a first buffer part configured to be higher than the sample injection part to have a step difference.

The pre-processing part may further include: a fluid storage part configured to branch from the sample injection part and to have a lower height than the first buffer part so as to be filled with the fluid first.

The height of the fluid storage part may be determined by the thickness of the OCA film.

The shape of the fluid storage part may be determined by the shape of the channel forming part.

The fluid storage part may branch from the sample injection part and may extend a predetermined length, and then may be formed to extend a predetermined length in a direction of the channel part.

The fluid storage part may include: a fluid storage part through-hole formed at an end thereof.

The fluid storage part may include: a margin part protruding therefrom in a direction in which the fluid storage part branches.

The pre-processing part may further include: a second buffer part spaced apart from the first buffer part by a predetermined interval so as to have a smaller volume than the first buffer part; and a first conjugate part provided between the first buffer part and the second buffer part so that an analyte material in the fluid reacts with an identification material.

The fluid analysis chip according to the present disclosure may further include: a leakage prevention hole formed on each side of the first conjugate part and the second buffer part.

The first conjugate part may include a plurality of pillars.

The height of the microchannel part may be changed by changing the thickness of the OCA film.

The height of the microchannel part may be changed by changing a number of the OCA films stacked.

The height of the microchannel part may be changed by stacking a combination of the OCA films having the same thickness or different thicknesses.

### Advantageous Effects

According to the present disclosure, it is possible to remove complex structures for organic solvent injection and diffusion, and produce a fluid analysis chip with a simple structure by using an optically clear adhesive (OCA) film.

In addition, it is possible to increase the accuracy of analysis by precisely controlling the height of an internal microchannel of the fluid analysis chip to conform to a variety of requirements.

Moreover, it is possible to ensure product reliability by achieving strong adhesion through bonding of the bonding surface area wider than in the case of the conventional chip.

Furthermore, it is possible to control the flow rate of a fluid and to cause a fluid to react with a sample buffer at a uniform rate by relieving hydrostatic pressure generated during fluid injection by means of a fluid storage part.

In addition, it is possible to prevent a phenomenon that occurs because the ratio of capillary force and resistance on the microchannel is very large at the beginning of fluid injection, that is, starting from a state where the velocity of the fluid is very high and decreases sharply as the length of the microchannel wetted with the fluid increases, thereby realizing stable fluid drive.

Moreover, it is possible to prevent leakage that may occur on the wall-free channel side when a contact angle with a plate is low due to the compositional characteristics of a sample.

Furthermore, it is possible to enable product changes at a low cost and to secure the degree of freedom in design tailored to the application target by making it possible to change the height and shape of a channel only by changing the shape and thickness of the OCA film without changing the structure of upper and lower plates.

### Description of Drawings

FIG. 1 is an exploded perspective view of a fluid analysis chip according to an embodiment of the present disclosure;
FIG. 2 is a plan view of the bonded state of a first plate and an OCA film of the fluid analysis chip according to the embodiment of the present disclosure viewed from the bottom;
FIG. 3 is a plan view showing the OCA film of the fluid analysis chip according to the embodiment of the present disclosure;
FIG. 4 is a block diagram showing a stepped structure of a microchannel part of the fluid analysis chip according to the embodiment of the present disclosure;
FIG. 5 is a partial cross-sectional view showing an example in which the height of the microchannel part is changed by changing the thickness of the OCA film of the fluid analysis chip according to the embodiment of the present disclosure;
FIG. 6 is a plan view showing a modified example in which a fluid storage part of the fluid analysis chip according to the embodiment of the present disclosure is removed;
FIG. 7 is a plan view showing a modified state of a channel connecting a first buffer part and a first conjugate part of the fluid analysis chip according to the embodiment of the present disclosure;
FIG. 8 is a plan view showing a modified example in which a margin part is added to the fluid storage part of the fluid analysis chip according to the embodiment of the present disclosure;
FIG. 9 are images of a fluid driving state over time in the fluid analysis chip according to the embodiment of the present disclosure;
FIG. 10 is an image observing whether a channel leaks after deionized water is injected into a conventional organic solvent bonding fluid analysis chip;
FIG. 11 is an image observing whether the channel leaks after vitamin D solution is injected into the conventional organic solvent bonding fluid analysis chip; and
FIG. 12 is an image observing whether a channel leaks after vitamin D solution is injected into the fluid analysis chip according to the present disclosure.

### Best Mode for Invention

Hereinafter, preferred embodiments of the present disclosure will be described in detail with reference to the accompanying drawings. However, the present disclosure is not limited to the embodiments described herein and may be embodied in other forms. Rather, the embodiments introduced herein are provided so that the disclosed subject matter will be thorough and complete, and that the spirit of the present disclosure may be sufficiently conveyed to those skilled in the art. Like reference numerals refer to like elements throughout.

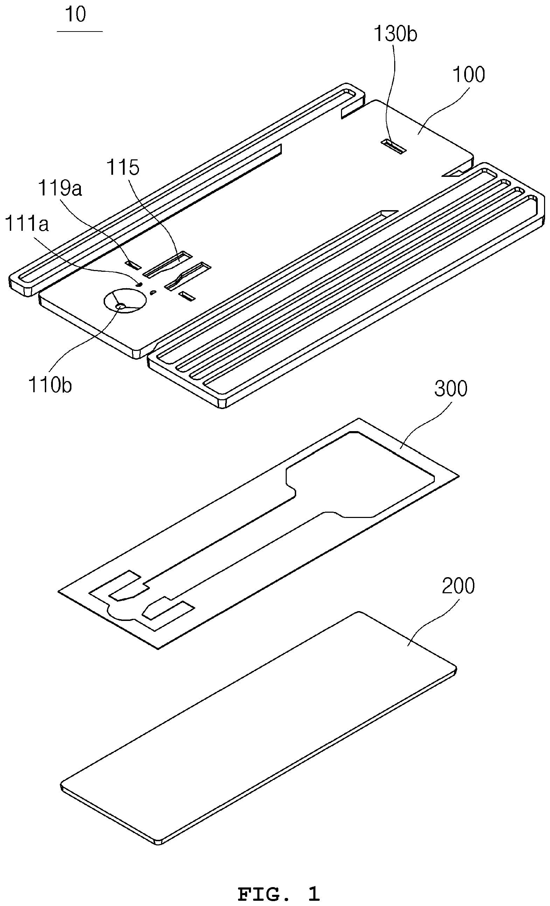

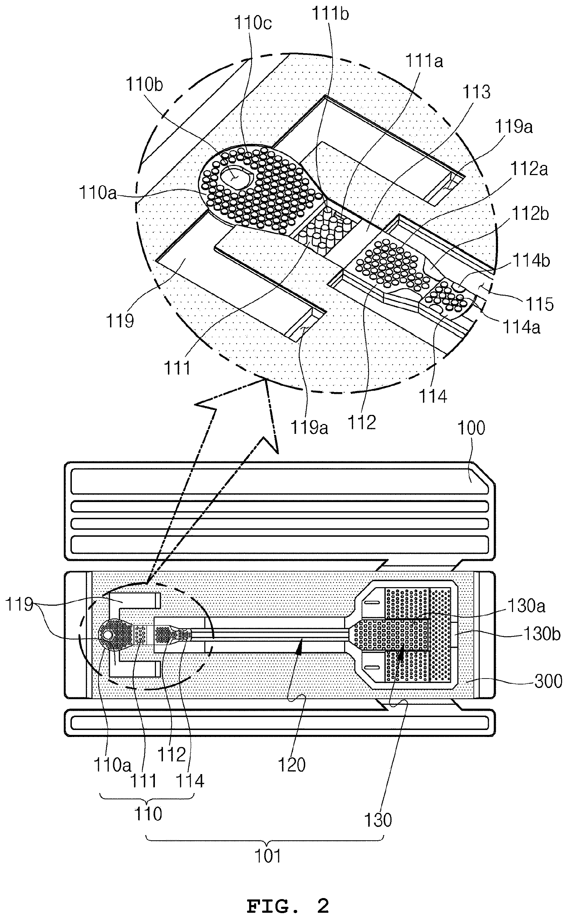

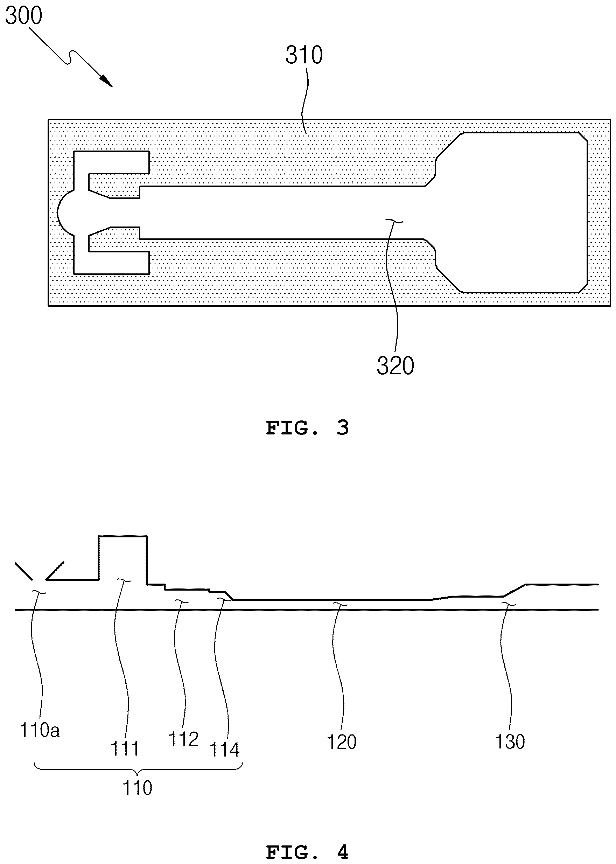

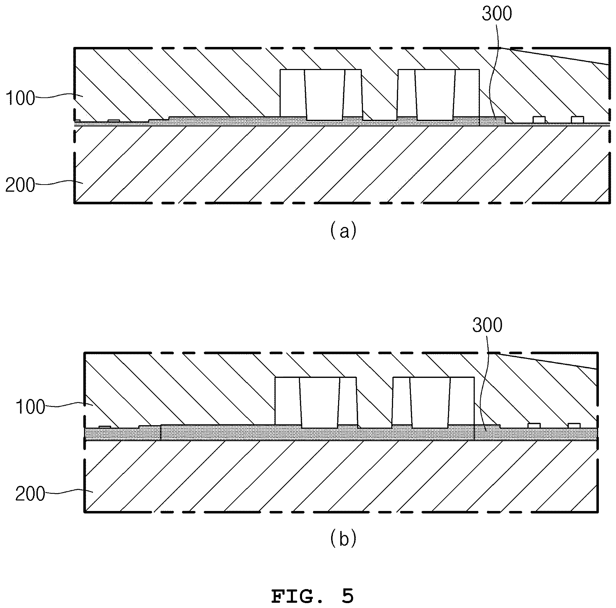

FIG. 1 is an exploded perspective view of a fluid analysis chip according to an embodiment of the present disclosure; FIG. 2 is a plan view of the bonded state of a first plate and an OCA film of the fluid analysis chip according to the embodiment of the present disclosure viewed from the bottom; FIG. 3 is a plan view showing the OCA film of the fluid analysis chip according to the embodiment of the present disclosure; FIG. 4 is a block diagram showing a stepped structure of a microchannel part of the fluid analysis chip according to the embodiment of the present disclosure; and FIG. 5 is a partial cross-sectional view showing an example in which the height of the microchannel part is changed by changing the thickness of the OCA film of the fluid analysis chip according to the embodiment of the present disclosure.

Referring to FIGS. 1 to 5, a fluid analysis chip 10 according to an embodiment of the present disclosure may include: a first plate 100; a second plate 200 configured to be bonded to the first plate 100; an optically clear adhesive (OCA) film 300 interposed between the first plate 100 and the second plate 200 to bond the first plate 100 and the second plate 200; and a microchannel part 101 formed to have a predetermined space between the first plate 100 and the second plate 200, and into which a fluid to be analyzed is introduced and through which the fluid to be analyzed flows.

The shape and height of at least a portion of the microchannel part 101 may be determined according to the shape and thickness of the OCA film 300.

The first plate 100 and the second plate 200 are bonded by the OCA film 300 to form the outer shape of the fluid analysis chip 10, and a fluid is introduced therebetween to flow and the microchannel part 101 made of a microcavity so that a desired antigen-antibody reaction may occur in a specific part is formed therebetween.

The OCA film 300 is an optical adhesive in transparent double-sided tape form. In addition to OCA, there is a transparent liquid type optical adhesive called optically clear resin (OCR) or liquid optically clear adhesive (LOCA). However, in this embodiment, the OCA film 300 is applied instead of a liquid type optical adhesive.

Here, the term "optically clear" means that the transmittance of the material itself is 90% or more, indicating a very transparent state. Polymers used as optical adhesive materials include acryl-based, silicone-based, and urethane-based polymers. Among them, acrylic polymers that have excellent transparency, are easy to design, can be cured rapidly by ultraviolet (UV) radiation, and have economic advantages are the most used.

In the past, liquid type adhesives such as organic solvents were applied as bonding agents. In this case, since it is necessary to separately provide a fine diffusion channel to diffuse the injected adhesive to the bonding surface together with an injection hole for injecting the liquid adhesive, processing is difficult, the processing cost increases, and the bonding strength is relatively small due to the small bonding area.

However, in the present disclosure, since the OCA film 300 is applied as a bonding agent, bonding with a simple structure can be achieved by removing the bonding-related structures that require precision processing, tolerances that may occur during such precision processing can be eliminated, and the stability and reliability of the product can be ensured by increasing bonding strength through bonding of a larger area than in the case of the conventional chip.

As shown in FIG. 3, the OCA film 300 may include: a bonding part 310 configured to contact and bond the first plate 100 and the second plate 200; and a channel forming part 320 configured to be formed through inside of the bonding part 310 and to determine the shape of at least a portion of the microchannel part 101.

As previously described, the bonding part 310 of the OCA film 300 has adhesive properties on both sides thereof like double-sided tape, and thus each side of the bonding part 310 serves to contact and bond the first plate 100 and the second plate 200.

In addition, the channel forming part 320 may be formed through inside of the bonding part 310 so as to have the same or similar shape as that of the microchannel part 101. At this time, the fact that the channel forming part 320 determines the shape of the microchannel part 101 means that the wall in the thickness direction of the channel forming part 320 forms the sidewall of the microchannel part 101.

That is, the OCA film 300 determines the shape of the microchannel part 101 as the OCA film 300 not only serves to bond the first plate 100 and the second plate 200, but also serves to form a sidewall of a portion of a microchannel or a sidewall of the entire microchannel formed between the first plate 100 and the second plate 200.

The OCA film 300 may determine not only the shape of the microchannel part 101 but also the height of the channel. As shown in FIG. 5, by changing only the thickness of the OCA film 300, the channel height of the microchannel part 101 may be easily adjusted. That is, as shown in FIG. 5 (a), when the thickness of the OCA film 300 is reduced, the height of the microchannel part 101 is reduced accordingly. Likewise, as shown in FIG. 5 (b), when the thickness of the OCA film 300 is increased, the height of the microchannel part 101 is increased accordingly.

Furthermore, the height of the microchannel part 101 may be changed by changing the number of OCA films 300 stacked. At this time, the height of the microchannel part 101 may be changed by stacking a combination of the OCA films 300 having the same thickness or different thicknesses.

For example, if the 100 µm channel height is the design goal, the height may be realized by applying the OCA film 300 having a 100 µm thickness, or by stacking two OCA films 300 each having a thickness of 50 µm. It is also possible to realize the desired design height by combining two 40 µm and one 20 µm.

In this way, by applying the OCA film 300 as a bonding agent, the complex shape of the microchannel may be easily designed and applied as desired. In particular, there is an advantage that the channel height related to the stable driving of the microchannel may be easily implemented as desired.

Meanwhile, microchannel part 101 may include: a pre-processing part 110 in which the fluid is injected and temporarily accommodated; a channel part 120 in which the fluid accommodated in the pre-processing part 110 moves and an antigen-antibody reaction occurs; and a washing part 130 in which residual fluid passed through the channel part 120 is accommodated.

The pre-processing part 110 is provided so that the fluid injected through a sample inlet 110b may smoothly move toward the channel part 120. The pre-processing part 110 may include: a sample injection part 110a into which the fluid is injected; and a first buffer part 111 configured to be higher than the sample injection part 110a to have a step difference. As shown in FIG. 4, the first buffer part 111 forms a step to be higher than the sample injection unit 110a, and serves as a buffer so that the fluid does not flow toward the channel part 120 at a high speed.

The pre-processing part 110 may further include: a fluid storage part 119 configured to branch from the sample injection part 110a and to have a lower height than the first buffer part 111 so as to be filled with the fluid first.

When the fluid is injected, the fluid storage part 119 allows the fluid to first fill the fluid storage part 119 having a relatively lower height than the first buffer part 111, then to fill the first buffer part 111, and then to flow to the channel part 120 side. By additionally designing the fluid storage part 119 in this way, the fluid flow velocity may be controlled more gently and the antigen-antibody reaction in the channel part 120 may be made well.

For example, in this embodiment, the height of the sample injection part 110a is 120 µm, the height of the fluid storage part 119 is 300 µm, and the height of the first buffer part 111 is 700 µm, and thus when the fluid is injected, the fluid first fills the fluid storage prat 119 and then flows to the first buffer part 111.

In the case of conventional chips, the fluid continuously flows into the sample inlet, and in this process, a driving force due to hydrostatic pressure is generated and the volume of the first buffer part is exceeded, so that there is a problem in that buffering may not be effectively performed.

As for the fluid analysis chip 10 according to the present disclosure, when the fluid is injected, since the fluid is completely injected into the fluid storage part 119 to minimize the hydrostatic pressure, the flow velocity is controlled only by capillary force in a state in which the hydrostatic pressure is sufficiently removed, so that stable fluid driving is possible. In addition, the fluid injected into the fluid storage part 119 reacts with a sample buffer at a uniform rate in a state where the hydrostatic pressure is minimized, thereby increasing the reactivity efficiency.

The height of the fluid storage part 119 may be determined by the thickness of the OCA film 300, and the shape of the fluid storage part 119 may be determined by the shape of the channel forming part 320. That is, the side wall forming the outer shape of the channel forming part 320 forms the side wall of the fluid storage part 119. Therefore, it is possible to easily change the height of the fluid storage part 119 by changing the thickness of the OCA film 300, and the shape of the fluid storage unit 119 may be freely changed by changing the shape of the channel forming part 320 of a portion corresponding to the fluid storage part 119.

In this embodiment, the fluid storage part 119 may branch from the sample injection part 110a and extends a predetermined length, and then may be formed to extend a predetermined length in the direction of the channel part 120. By forming the fluid storage part 119 in this way, space utilization may be improved and the volume of the fluid storage part 119 may be formed relatively large. Moreover, since the fluid stored in the fluid storage part 119 flows in the direction of the channel part 120 and then flows in the reverse direction when exiting to flow toward the first buffer part 111 and the channel part 120 through the sample injection part 110a, fluid driving speed may be adjusted more gently.

The fluid storage part 119 may include: a fluid storage part through-hole 119a formed at the end thereof. The fluid storage part through-hole 119a serves to discharge the air mixed with the fluid and to allow the fluid to flow to the end of the fluid storage part 119 to be well filled.

As described above, the injected fluid is first filled in the fluid storage part 119, and then flows to the channel part 120 after filling the first buffer part 111.

The pre-processing part 110 may further include: a first conjugate part 112 provided so that an analyte material in the fluid moved through the first buffer part 111 reacts with an identification material; and a second buffer part 114 spaced apart from the first buffer part 111 by a predetermined interval and provided to have a smaller volume than the first buffer part 111.

In addition, in this embodiment, a connection channel 113 connecting the first buffer part 111 and the first conjugate part 112 is provided, and the OCA film 300 forms a sidewall to guide the sample injection part 110a, the fluid storage part 119, the first buffer part 111, and the connection channel 113 of the pre-processing part 110.

As described above, the sample injection part 110a, the first buffer part 111, the connection channel 113, the first conjugate part 112, and the second buffer part 114 form a portion of the microchannel part 101 and, more specifically, form the pre-processing part 110 in the microchannel part 101.

In addition, the sample injection part 110a is configured so that the fluid injected through the sample inlet 110b is temporarily stored and then moved to the fluid storage part 119 and the first buffer part 111 side. The sample injection part 110a is provided with a plurality of injection part pillars 110c protruding downward from the upper surface. Here, the upper surface is defined with respect to the microchannel part 101, and refers to the lower surface of the first plate 100. This upper surface-related definition is equally applicable hereafter.

The injection part pillar 110c is configured to be provided in plurality, spaced apart from each other by a predetermined distance so as to protrude from the upper surface of the sample injection part 110a at a position adjacent to the sample inlet 110b. The injection part pillar 110c increases the surface area of the portion adjacent to the sample inlet 110b, thereby increasing the mixing effect between the fluid injected through the sample inlet 110b and the sample buffer applied to the lower side of the sample inlet 110b.

As described above, the first buffer part 111 is configured to adjust the amount of fluid flowing into the channel part 120 by storing a predetermined amount of the fluid as the first buffer part 111 primarily accommodates the fluid when the fluid temporarily stored in the fluid storage part 119 after flowing thereinto through the sample injection part 110a flows out of the fluid storage part 119.

A pair of first buffer part through-holes 111a are formed in the first buffer part 111 to delay the flow velocity of the fluid moving along the sidewall and suppress bubbles that may occur in the fluid. As shown in FIG. 2, the first buffer part through-hole 111a may be formed as a pair so that each through-hole 111a penetrates the left side and right side of the upper surface of the first buffer part 111, respectively.

It is desirable that the profile of the fluid flowing out of the fluid storage part 119 and moving toward the first buffer part 111 through the sample injection part 110a be introduced to have a front head toward the central region of the first buffer part 111. That is, both ends of the fluid moving from the sample injection part 110a to the first buffer part 111 are moved along the sidewall formed by the OCA film 300, and it is necessary to readjust the profile of the fluid to have the front head toward the central region of the first buffer part 111 by delaying the flow velocity of both ends of the fluid moving along the wall. At this time, the first buffer part through-holes 111a delay the flow velocity of both ends of the fluid moving along the side wall with the air flowing in from outside, thereby achieving the objective just mentioned.

Furthermore, in the fluid analysis chip 10 according to the present disclosure, the fluid moves by capillary force due to the structural features without external power being provided. As such, when the fluid fills a certain space without external power, bubbles may be generated at the edge of the closed structure, and the bubbles not only reduce the volume in which the fluid may be stored, but also impede the flow of the fluid. The first buffer part through-holes 111a serve to suppress the generation of such bubbles and also to remove the bubbles with the air flowing in from outside even if the bubbles are generated.

As shown in FIG. 2, the first buffer part 111 further includes a plurality of first buffer part pillars 111b protruding downward from the upper surface. A plurality of first buffer pillars 111b are provided to be spaced apart from each other by a predetermined interval so as to protrude downward from the upper surface of the first buffer part 111. The first buffer pillars 111b serve to increase the mixing effect between the fluid and the sample buffer by increasing the surface area of the first buffer part 111, and to promote effective flow of the fluid by imparting directionality to the flow of the fluid moving from the first buffer part 111 to the first conjugate part 112 side.

The first conjugate part 112 is provided so that an analyte in the fluid moved through the first buffer part 111 reacts with the identification material. The analyte in the fluid injected through the sample inlet 110b reacts primarily with the sample buffer applied on the upper surface of the second plate 200 at a point corresponding to the position where the sample inlet 110b is formed so as to create an environment in which a reaction may occur well, and reacts with the identification material also applied on the upper surface of the second plate 200 while passing through the first conjugate part 112.

A plurality of first conjugate part pillars 112a may be provided on the upper surface of the first conjugate part 112 to increase the mixing effect between the analyte and the identification material in the fluid.

Meanwhile, the first conjugate part 112 includes a pair of first conjugate part tunnel walls 112b each of which protrudes symmetrically from the upper surface of one end of the first conjugate part 112. The first conjugate part tunnel walls 112b serve to concentrate the flow of the fluid so that the fluid may flow in only one direction.

That is, in the absence of the tunnel walls 112b of the first conjugate part, the fluid flows first along the edge portion having a relatively large capillary force, and thus the flow of the fluid flowing into the channel part 120 becomes unstable, which can lead to unstable reactivity in the channel part 120.

In order to avoid such problems, the first conjugate part tunnel wall 112b is provided as a columnar structure protruding downward from each end of the upper surface of the first conjugate part 112, and concentrates the direction of the fluid flowing out from the first conjugate part 112 to the center.

The second buffer part 114 is configured to be connected to the first conjugate part 112, and is provided so that the fluid that has passed through the first conjugate part 112 may be combined with the identification material once again. Analytes in the fluid introduced into the first conjugate part 112 primarily reacts with the identification material in the first conjugate part 112, some of which flows out of the first conjugate part 112 without reacting with the identification material. Accordingly, there is a need to mix the identification material washed as the fluid moves and the analytes that did not react with the identification material once again, and the second buffer part 114 plays this mixing role. That is, the second buffer part 114 is provided to increase the amount of fluid capable of reacting with the identification material within a possible range, thereby helping to improve the reliability of the fluid analysis chip 10.

Meanwhile, the second buffer unit 114 includes a plurality of second buffer part pillars 114a protruding from the upper surface thereof and a pair of second buffer part guides 114b.

The second buffer part pillars 114a are configured to protrude from the upper surface of the second buffer part 114 to be spaced apart from each other by a predetermined distance. In the absence of the second buffer part pillars 114a, the fluid flowing from the first conjugate part 112 to the second buffer part 114 side has a linear laminar flow shape, and in this case, the mixing effect of the second buffer 114 decreases. The second buffer part pillar 114a allows time for the identification material and the fluid to sufficiently react in the second buffer part 114 by interfering with this laminar flow of the fluid and increasing the surface area of the second buffer part 114. The second buffer part pillar 114a has a height sufficient to be in close contact with or adjacent to the upper surface of the second plate 200 when the first plate 100 and the second plate 200 are bonded to each other.

The second buffer part guides 114b are configured to protrude downwardly so as to be symmetrical with each other from the central region of the upper surface of the second buffer part 114. In the absence of the second buffer part guides 114b, the fluid flows in a direction in which it first hits the starting point of the channel part 120, and in this case, if the flow of the fluid is not concentrated in the center of the channel part 120, the fluid in the channel part 120 may not be able to smoothly perform a specific reaction such as an antigen-antibody reaction. The second buffer part guides 114b control the flow of the fluid so that the front head part of the fluid first hits the center of the channel part 120, and accordingly, the second buffer part guides 114b help the fluid to smoothly perform a specific reaction in the channel part 120. Like the second buffer part pillar 114a, the second buffer part guide 114b has a height sufficient to be in close contact with or adjacent to the upper surface of the second plate 200 when the first plate 100 and the second plate 200 are bonded to each other.

Meanwhile, a pair of leak prevention holes 115 are formed to be adjacent to both side surfaces of the first conjugate part 112 and the second buffer part 114. The leak prevention holes 115 are formed as a pair so as to penetrate the first plate 100 at positions adjacent to both sides of the first conjugate part 112 and the second buffer part 114.

As the channel part 120 of this embodiment is provided in a wall-free form which will be described later, there is a problem that the fluid flowing into the channel part 120 through the second buffer part 114 may leak to the outside at the start point of the wall-free section of the channel part 120. The leak prevention hole 115 not only induces a stable flow of the fluid by allowing the fluid passing through the starting point of the channel part 120 to receive the same air pressure, but also prevents the fluid from leaking to the outside, by introducing external air at the starting point of the wall-free section of the channel part 120.

Meanwhile, the channel part 120 is implemented in a wall-free form and is configured such that the fluid accommodated in the pre-processing part 110 moves and performs a specific reaction such as an antigen-antibody reaction. The channel part 120 in the wall-free form is detailed in the previous applications of the present applicant (Korean Patent No. 10-0905954, Korean Patent No. 10-0900511, Korean Patent No. 10-0878229, and US Patent Application No. 12/667, 371), so a detailed description thereof will be omitted.

At one end of the fluid analysis chip 10, which is adjacent to the end point of the channel part 120, a washing part 130 in which the fluid that has passed through the channel part 120 is accommodated is provided.

The washing part 130 is a portion that provides a space in which substances other than analytes fixed to the channel part 120 may be accommodated. Substances other than the analytes in the fluid flowing along the channel part 120 due to capillary force may be viewed as a kind of noise that reduces the accuracy of the analysis, and the washing part 130 provides a space capable of accommodating such noise to increase the analytical power of the fluid analysis chip 10.

The washing part 130 includes: a plurality of washing part pillars 130a; and a washing part through-hole 130b formed at an end of the washing part 130.

The washing part pillars 130a are formed over most of a washing channel 131, and are provided in plurality so as to protrude downward from the upper surface of the washing part 130, that is, from the lower surface of the first plate 100. In addition, the washing part pillars 130a are formed more densely toward the end of the washing part 130 so that the fluid may sufficiently move to the end of the washing channel 130 with the help of increased capillary force. In other words, the fluid of this embodiment is moved purely by capillary force, and since this capillary force becomes weaker from one end of the fluid analysis chip 10 to the other end of the fluid analysis chip 10, the washing part pillars 130a are provided to compensate for this. The washing part pillars 130a reinforce the weakened capillary force by increasing the surface area that may be touched by the fluid.

The washing part through-hole 130b creates a flow of pressure and air in the washing part 130 so that the fluid may proceed to the washing part 130.

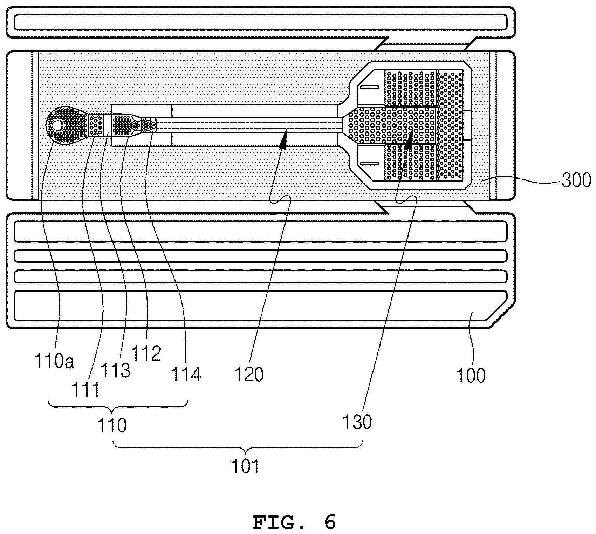

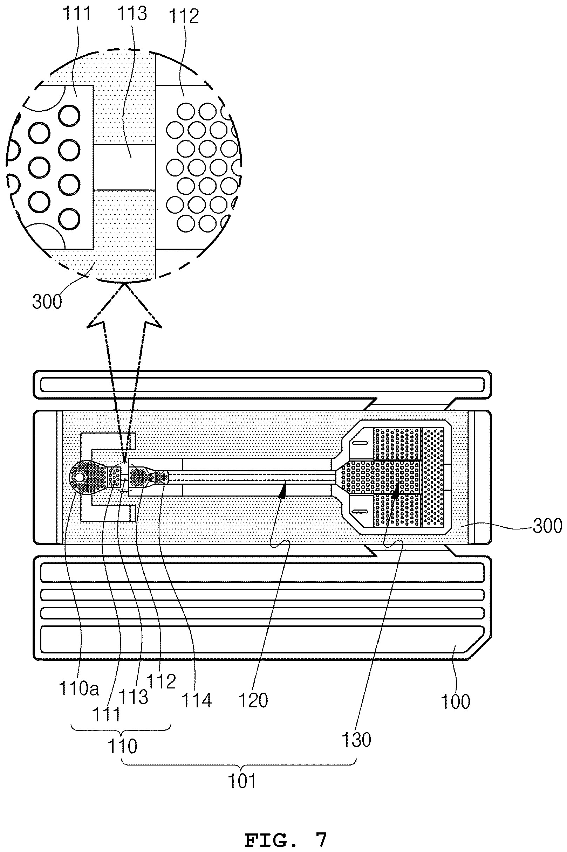

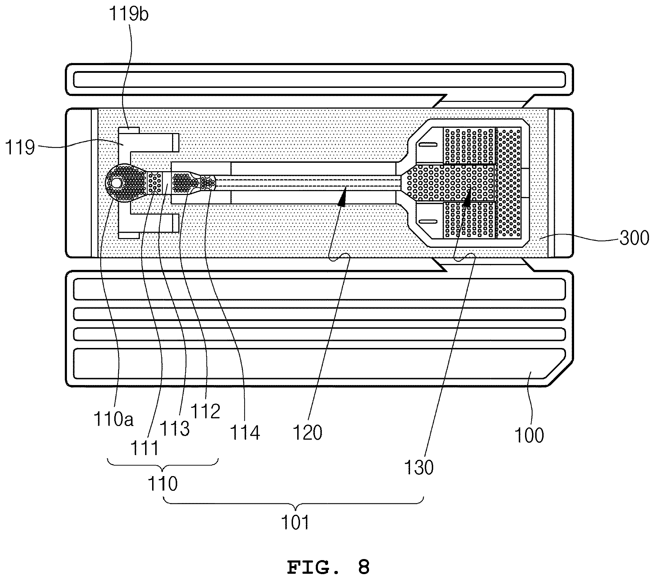

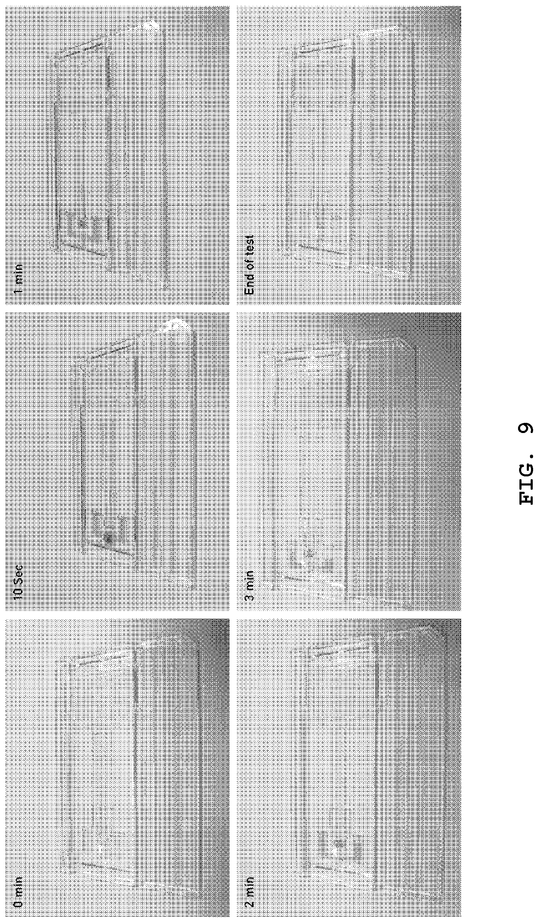

FIG. 6 is a plan view showing a modified example in which a fluid storage part of the fluid analysis chip according to the embodiment of the present disclosure is removed; FIG. 7 is a plan view showing a modified state of a channel connecting a first buffer part and a first conjugate part of the fluid analysis chip according to the embodiment of the present disclosure; FIG. 8 is a plan view showing a modified example in which a margin part is added to the fluid storage part of the fluid analysis chip according to the embodiment of the present disclosure; and FIG. 9 are images of a fluid driving state over time in the fluid analysis chip according to the embodiment of the present disclosure.

Referring to FIGS. 1 to 9, modifications and examples of use of the present disclosure are as follows.

First, as shown in FIG. 6, the fluid storage part 119 may be removed. For example, in the case of a fluid having a relatively high viscosity, since the volume of the first buffer part 111 alone may sufficiently lower the flow velocity, the fluid storage part 119 is excluded.

At this time, the design may be easily changed by changing only the shape of the channel forming part 320 of the OCA film 300 so that there is no fluid storage part 119 without changing the structure of the first plate 100 or the second plate 200. That is, since changing the structure of the first plate 100 or the second plate 200 is not necessary, the above modification may be carried out only by changing the OCA film 300 without the need to produce and apply a new injection mold.

FIG. 7 is a modified example in which the width of the connection channel 113 is reduced. As can be seen in this case, only by changing the OCA film 300, the width of the connection channel 113 connecting the first buffer part 111 and the first conjugate part 112 was changed without changing the structure of the first plate 100 or the second plate 200. For fluids with low viscosity, it is necessary to lower the flow velocity sufficiently, so the above design changes may be applied.

FIG. 8 is an example in which a margin part 119b protruding in a branching direction of the fluid storage part 119 is applied to the fluid storage part 119. By providing the margin part 119b as described above, the volume of the fluid storage part 119 may be increased, and the flow path of the fluid may be increased to effectively reduce the flow velocity. Even in the case of adding the margin part 119b in this way, it is applicable by changing only the shape of the OCA film 300.

An example of using the fluid analysis chip 10 according to an embodiment of the present disclosure will be described with reference to FIG. 9.

First, the fluid to be analyzed is injected through the sample inlet 110b, and the fluid is first filled in the fluid storage part 119 about 10 seconds after injection. At this time, the analyte in the fluid reacts primarily with the sample buffer applied on the upper surface of the second plate 200 at a point corresponding to the sample inlet 110b, and this reaction may be performed when the fluid is introduced or while flowing back from the fluid storage part 119 to the sample injection part 110a. The sample buffer serves to help the analyte contained in the fluid smoothly react with the identification material applied on the upper surface of the second plate 200 at a point corresponding to the region in which the first conjugate portion 112 is formed and the reactant applied on the channel part 120.

When about one minute has elapsed after injection, it can be seen that the fluid flowing out from the fluid storage part 119 fills the first buffer part 111 and flows toward the channel part 120 side. The fluid reacted with the sample buffer is primarily accommodated in the first buffer part 111, and then reacts with the identification material applied on the first conjugate part 112, and then is secondarily accommodated in the second buffer part 114. At this time, the generation of bubbles in the first buffer part 111 is suppressed by the first buffer part through-holes 111a formed in the first buffer part 111, and due to the features of the second buffer part 114 provided to have a smaller volume than the first buffer part 111, the residual amount of the fluid accommodated in the second buffer part 114 is minimized and the fluid that did not react with the identification material may smoothly move toward the washing part 130.

The fluid stored in the second buffer part 114 flows into the channel part 120 side by capillary force. The fluid moving along the channel part 120 undergoes a specific reaction such as an antigen-antibody reaction with the reactant applied on a certain region of the channel part 120, and thus the fluid may be analyzed from the outside. Finally, the residual fluid that has not reacted in the channel part 120 is received through the washing part 130.

After 3 minutes after injection, it can be confirmed that a significant amount of the fluid contained in the fluid storage part 119 has escaped. After that, it can be seen that most of the fluid flows out from the fluid storage part 119, and the reaction is made in the channel part 120, and the residual fluid is accommodated in the washing part 130.

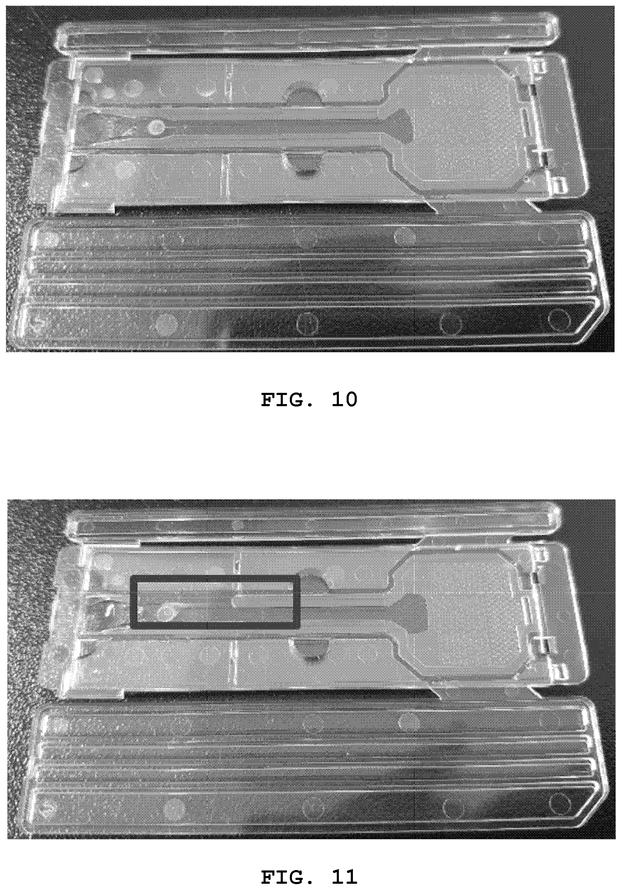

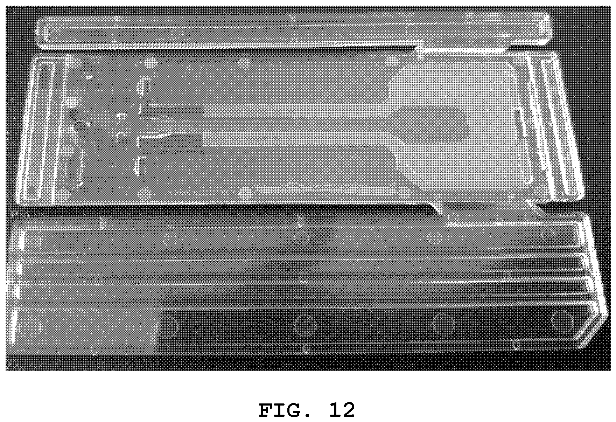

FIG. 10 is an image observing whether a channel leaks after deionized water is injected into a conventional organic solvent bonding fluid analysis chip; FIG. 11 is an image observing whether the channel leaks after vitamin D solution is injected into the conventional organic solvent bonding fluid analysis chip; and FIG. 12 is an image observing whether a channel leaks after vitamin D solution is injected into the fluid analysis chip according to the present disclosure.

As previously described, when the contact angle with the plate is low due to the compositional characteristics of a sample, there is a problem in that leakage occurs in the wall-free channel.

The solution contact angle test was performed as follows in order to check whether leakage actually occurs depending on the contact angle.
- Equipment used: SEO Phoenix 300
- Information on the solution used (3 types)

Deionized water
Bovine serum: Gibco^{®}Bovine Serum
Vitamin D buffer: Using our own products
   - Test environment: room temperature 25°C clean room environment
   - Test method
Put the solution to be tested into a syringe and operate the equipment
Through this contact angle test, the contact angles of the above three solutions were obtained as shown in the table below.

**[Table 1]**

| Solution Type | Contact Angle of Solution (PMMA substrate) |
|---|---|
| Deionized water | 48.1° |
| Bovine serum | 46.9° |
| Vit. D buffer | 11.5° |

The contact angle of DI water on a poly (methyl methacrylate) (PMMA) substrate treated with O2 plasma is usually 40° to 60°, and in the case of the vitamin D assay sample, it shows a relatively low contact angle with the PMMA substrate because it contains a lysis buffer.

First, after injecting deionized water into the conventional organic solvent bonding fluid analysis chip, the leakage of the channel was observed. As shown in FIG. 10, in the case of deionized water, it can be confirmed that leakage does not occur because the contact angle is large. Although not shown, leakage did not occur in the case of bovine serum with a large contact angle.

However, when the vitamin D solution was injected into the conventional organic solvent bonding fluid analysis chip, leakage occurred as shown in FIG. 11. In the case of vitamin D solution, since the contact angle is small, it can be confirmed that the possibility of leakage is large even when the fluid velocity is very low.

Accordingly, the channel height was changed by using the fluid analysis chip according to the present disclosure, and as a result, as shown in FIG. 12 , when the vitamin D solution was injected, it was confirmed that the driving of fluid was well performed without leakage.

As such, in the case of the conventional organic solvent bonding fluid analysis chip, since a wall-free channel structure is an important structure that provides a stabilized flow, much effort was needed to implement a chip having various step differences while maintaining this structure.

When the contact angle with the plate is low due to the compositional characteristics of the sample, there was a problem of leakage in the wall-free channel, and it was not easy to change the design of the chip to solve this problem in the organic solvent bonding chip.

However, in the case of the fluid analysis chip according to the present disclosure, through OCA film bonding, it is possible to realize a structure (fluid storage part) that can easily change the design of the chip, and as a result, the bursting (leakage) phenomenon of the wall-free channel structure was overcome.

Therefore, the fluid analysis chip according to the present disclosure is differentiated in that the channel height and shape can be determined only with the OCA film layer, and it has a complex structure capable of forming a channel height and wall-free channel with various step differences due to a combined element of the OCA film layer and the upper plate injection molded part.

According to the fluid analysis chip according to the embodiments of the present disclosure described so far, the chip can be produced in a simple structure by bonding upper and lower plates using OCA film, can be used with the inner height and shape precisely controlled to conform to a variety of requirements, and can enhance reliability due to greater adhesiveness than in the conventional chip.

Although the above has been described with reference to an embodiment of the present disclosure, those skilled in the art will be able to variously modify and change the present disclosure within the scope without departing from the spirit and scope of the present disclosure described in the claims described below. Therefore, if the modified implementation basically includes the elements of the claims of the present disclosure, all of them should be considered to be included in the technical scope of the present disclosure.

## Claims

1. A fluid analysis chip, comprising:
a first plate;
a second plate configured to be bonded to the first plate;
an optically clear adhesive (OCA) film interposed between the first plate and the second plate to bond the first plate and the second plate; and
a microchannel part formed to have a predetermined space between the first plate and the second plate, and into which a fluid to be analyzed is introduced and through which the fluid to be analyzed flows,
wherein shape and height of at least a portion of the microchannel part are determined according to shape and thickness of the OCA film.

2. The fluid analysis chip of claim 1, wherein at least a portion of the microchannel part has a wall-free structure.

3. The fluid analysis chip of claim 1, wherein the OCA film comprises:
a bonding part configured to contact and bond the first plate and the second plate; and
a channel forming part configured to be formed through inside of the bonding part and to determine the shape of at least a portion of the microchannel part.

4. The fluid analysis chip of claim 3, wherein the microchannel part comprises:
a pre-processing part in which the fluid is injected and temporarily accommodated;
a channel part in which the fluid accommodated in the pre-processing part moves and an antigen-antibody reaction occurs; and
a washing part in which residual fluid passed through the channel part is accommodated.

5. The fluid analysis chip of claim 4, wherein the pre-processing part comprises:
a sample injection part into which the fluid is injected; and
a first buffer part configured to be higher than the sample injection part to form a step.

6. The fluid analysis chip of claim 5, wherein the pre-processing part further comprises:
a fluid storage part configured to branch from the sample injection part and to have a lower height than the first buffer part so as to be filled with the fluid first.

7. The fluid analysis chip of claim 6, wherein a height of the fluid storage part is determined by the thickness of the OCA film.

8. The fluid analysis chip of claim 6, wherein a shape of the fluid storage part is determined by a shape of the channel forming part.

9. The fluid analysis chip of claim 6, wherein the fluid storage part branches from the sample injection part and extends a predetermined length, and then is formed to extend a predetermined length in a direction of the channel part.

10. The fluid analysis chip of claim 9, wherein the fluid storage part comprises:
a fluid storage part through-hole formed at an end thereof.

11. The fluid analysis chip of claim 9, wherein the fluid storage part comprises:
a margin part protruding therefrom in a direction in which the fluid storage part branches.

12. The fluid analysis chip of claim 6, wherein the pre-processing part further comprises:
a second buffer part spaced apart from the first buffer part by a predetermined interval so as to have a smaller volume than the first buffer part; and
a first conjugate part provided between the first buffer part and the second buffer part so that an analyte material in the fluid reacts with an identification material.

13. The fluid analysis chip of claim 12, further comprises:
a leakage prevention hole formed on each side of the first conjugate part and the second buffer part.

14. The fluid analysis chip of claim 12, wherein the first conjugate part includes a plurality of pillars.

15. The fluid analysis chip of claim 1, wherein the height of the microchannel part is changed by changing the thickness of the OCA film.

16. The fluid analysis chip of claim 1, wherein the height of the microchannel part is changed by changing a number of the OCA films stacked.

17. The fluid analysis chip of claim 16, wherein the height of the microchannel part is changed by stacking a combination of the OCA films having the same thickness or different thicknesses.
